**Europäisches Patentamt**

**European Patent Office**

**Office européen des brevets**

(19)

(11) Veröffentlichungsnummer: **0 293 941 B1**

## (12) EUROPÄISCHE PATENTSCHRIFT

(45) Veröffentlichungstag der Patentschrift:
22.05.91 Patentblatt 91/21

(51) Int. Cl.$^5$: **B28D 1/02**

(21) Anmeldenummer: **88109002.1**

(22) Anmeldetag: **06.06.88**

(54) **Verfahren zum Schärfen von Trennwerkzeugen für das Abtrennen von Scheiben von stab- oder blockförmigen Werkstücken und Trennverfahren.**

(30) Priorität: **05.06.87 DE 3718947**

(43) Veröffentlichungstag der Anmeldung:
**07.12.88 Patentblatt 88/49**

(45) Bekanntmachung des Hinweises auf die
Patenterteilung:
**22.05.91 Patentblatt 91/21**

(84) Benannte Vertragsstaaten:
**DE FR GB IT**

(56) Entgegenhaltungen:
**DE-A- 1 931 891**
**DE-A- 2 359 096**
**US-A- 4 501 258**

(73) Patentinhaber: **Wacker-Chemitronic
Gesellschaft für Elektronik-Grundstoffe mbH
Johannes-Hess-Strasse 24
W-8263 Burghausen (DE)**

(72) Erfinder: **Brehm, Gerhard, Dr. Dipl.-Ing.
Forststrasse 27
W-8261 Emmerting (DE)**
Erfinder: **Niedermeier, Johann
Hochkalterstrasse 4
W-8263 Burghausen (DE)**

## Beschreibung

Die Erfindung betrifft ein Verfahren zum Schärfen von Trennwerkzeugen mit auf die Schneidkante aufgebrachtem Schneidbelag mit gebundenem Schneidkorn für das Abtrennen von Scheiben von stab- oder blockförmigen Werkstücken insbesondere aus Halbleitermaterial durch kurzzeitiges Sägen in einen Feststoff, sowie ein Trennverfahren.

Für das Abtrennen von Scheiben mit typisch 0.1 bis 1 mm Scheibendicke von stab- oder blockförmigen Werkstücken, insbesondere aus Halbleitermaterialien wie Silicium, Germanium oder Galliumarsenid oder oxidischem Material wie Gallium-Gadolinium-Granat, Rubin oder Quarzglas werden bevorzugt Innenlochsägen eingesetzt. Die bei diesen Sägen verwendeten Sägeblätter besitzen in ihrem Zentrum ein kreisförmiges Loch, dessen mit einem Schneidbelag mit gebundenem Schneidkorn versehene Innenkante beim Trennvorgang den Materialabtrag bewirkt. In vielen Fällen besteht diese Schneidkante beispielsweise aus einer den Innenrand des Sägeblattes umgebenden, z.B. tropfenförmigen Querschnitt aufweisenden Nickelschicht mit darin gebundenen Diamantkörnern.

Derartige Schneidbeläge mit gebundenem Korn werden auch bei Außentrennsägen mit kreisförmigem Sägeblatt oder Bandsägen eingesetzt, die aber zumindest auf dem Halbleitergebiet keine den Innenlochsägen vergleichbare Bedeutung erlangt haben. Bei allen diesen Sägetypen nützt sich im Verlauf des Sägevorganges die Schneidkante ab, was schließlich dazu führt, daß die Sollschnittlinie nicht mehr eingehalten werden kann. Beim Innenlochsägen von Halbleiterscheiben, bei denen es auf eine besonders hohe geometrische Präzision ankommt, wird beispielsweise beobachtet, daß die Geometrie der erhaltenen Scheiben im Verlauf einer Serie von Schnitten sich deutlich verändert.

In der DE-B-23 59 096 wird daher vorgeschlagen, bei Überschreitung einer gewissen Durchbiegungstoleranz der Scheiben das Sägeblatt durch kurzzeitiges Sägen in ein hartes Material, das exponiert liegende Diamantkörner herausschlägt, nachzuschärfen. In der Regel verbessert sich danach zumindest für einige Sägevorgänge das Schnittergebnis. Erfahrungsgemäß werden jedoch mit steigender Standzeit des Sägeblattes die erforderlichen Schärfintervalle immer kürzer, bis schließlich auch mehrmaliges Nachschärfen keine Verbesserung mehr bewirkt. In diesem Fall muß das Sägeblatt ausgewechselt werden, was einerseits mit Materialkosten, aber auch mit Stillstandzeiten für den Ein- und Ausbau verbunden ist. Werden also strengere Anforderungen an die geometrische Qualität der erhaltenen Scheiben gestellt, so führt dies zwangsläufig zu einer verringerten Standzeit der Sägeblätter mit den damit verbundenen Nachteilen.

Aufgabe der Erfindung war es, ein Verfahren zum Schärfen von Trennwerkzeugen sowie ein Trennverfahren anzugeben, das es ermöglicht, die Standzeit zu erhöhen, die Schnittpräzision zu verbessern und dabei insbesondere auch strenge Anforderungen an die geometrische Qualität von Halbleiterscheiben zu erfüllen.

Gelöst wird die Aufgabe durch ein Verfahren, welches dadurch gekennzeichnet ist, daß beim kurzzeitigen Sägen zusätzlich zu einer dem Sägevorgang entsprechenden Relativbewegung zwischen Schneidkante und Feststoff eine dazu transversale oszillierende Relativbewegung zwischen Schneidkante und Feststoff ausgeführt wird.

Als Feststoff kommen die in der Schärftechnik gebräuchlichen Materialien in Frage, wie sie beispielsweise auch in den sog. "Abziehsteinen" eingesetzt werden, die meist Aluminiumoxid- oder Siliciumcarbidpulver als Schleifmittel enthalten, welches in ein Trägermaterial auf keramischer oder Kunststoffbasis eingebunden ist.

Vorteilhaft wird bei dem Verfahren die Relativbewegung zwischen Schneidkante und Feststoff, die der beim eigentlichen Sägevorgang ablaufenden Relativbewegung zwischen Schneidkante und Werkstück entspricht, mindestens mit der dabei eingehaltenen Vorschubgeschwindigkeit durchgeführt. Gebräuchliche Vorschubgeschwindigkeiten, die naturgemäß stark vom zu zersägenden Material und dem Trennwerkzeug abhängen, liegen z.B. beim Innenlochsägen von Halbleiterscheiben aus beispielsweise Silicium typisch im Bereich von etwa 10 bis 100 mm/min.

Vorzugsweise wird dieser Sägeschritt mindestens bis zu einer Schnittiefe in den Feststoff gelegt, bei der sichergestellt ist, daß sich die breiteste Stelle des Schneidbelages innerhalb des Feststoffes befindet. In den meisten Fällen ist es nicht nötig, den Schneidbelag über seine gesamte Tiefe in den Feststoff eindringen zu lassen, wobei eine solche Vorgehensweise jedoch selbstverständlich nicht ausgeschlossen ist. Beispielsweise hat sich bei den für das Abtrennen von Halbleiterscheiben häufig eingesetzten Innenlochsägen, deren Sägeblätter typisch mit einem meist etwa 2 mm hohen Schneidbelag mit tropfenförmigem Querschnitt aus in einer Nickelschicht gebundenen Diamantkörnern versehen sind, eine Schnittiefe von 50 bis 100% der Gesamthöhe des Schneidbelages, also 1 bis 2 mm, vorzugsweise 1.3 bis 1.8 mm bewährt.

Wenn die dem eigentlichen Sägevorgang entsprechende Relativbewegung zwischen Schneidkante und Feststoff die vorgesehene Schnittiefe erreicht hat, wird erfindungsgemäß eine zu dieser transversale oszillierende Relativbewegung zwischen der Schneidkante und dem Feststoff ausgeführt, und zwar vorteilhaft in der Weise, daß bei ortfestem rotierendem Sägeblatt der Feststoff bewegt wird. Grundsätzlich ist es zwar ausreichend, letzteres durch Druck oder Zug während einer vollen Umdrehung des Sägeblattes gegen die eine Seitenfläche des Schneidbelages und bei einer folgenden vollen Umdrehung gegen die andere Seitenfläche zu bewegen. Bessere Ergebnisse werden jedoch erzielt wenn während mehrerer, zweckmäßig mindestens fünf, Umläufe des Sägeblattes und damit der Schneidkante mehrere Oszillationen des Feststoffes vollführt werden.

Vorteilhaft werden die transversalen, oszillierenden Relativbewegungen in der Weise ausgeführt, daß dabei die Maximalgeschwindigkeit, mit der sich der Feststoff in Richtung auf die Seitenflächen des Sägeblattes zubewegt, mindestens der Umlaufgeschwindigkeit der Schneidkante entspricht. Solche Umlaufgeschwindigkeiten liegen z.B. bei für das Innenlochsägen von Siliciumstäben mit ca. 10 cm Durchmesser gebräuchlichen Innenlochdurchmessern von etwa 18 cm im Bereich von 10 bis 30 m/sec. Naturgemäß können diese Werte jedoch innerhalb weiter Grenzen variieren, in Abhängigkeit von den jeweiligen Sägeblatt- und Werkstückdimensionen.

Eine andere Möglichkeit der oszillierenden Relativbewegung besteht darin, anstelle einer Hin- und Herbewegung mit dem Feststoff eine Schwenkbewegung um eine radial auf den Mittelpunkt des Sägeblattes gerichtete Drehachse auszuführen. Diese Variante hat den Vorteil, daß einseitige Belastungen der Schneidkante vermieden werden.

In den meisten Fällen ist es ausreichend, wenn bei der Oszillation die Auslenkung des Feststoffes relativ zum rotierenden Sägeblatt bzw. dem umlaufenden Schneidbelag etwa 0.1 bis 1 mm beträgt.

Obwohl bei dem Schärfverfahren die beiden den verschiedenen Relativbewegungen entsprechenden Teilschritte in der Regel nacheinander ausgeführt werden, ist es grundsätzlich nicht ausgeschlossen, diese auch gleichzeitig ablaufen zu lassen. In diesem Fall wird zum Schärfen des Sägeblattes in einen oszillierenden Feststoff eingesägt.

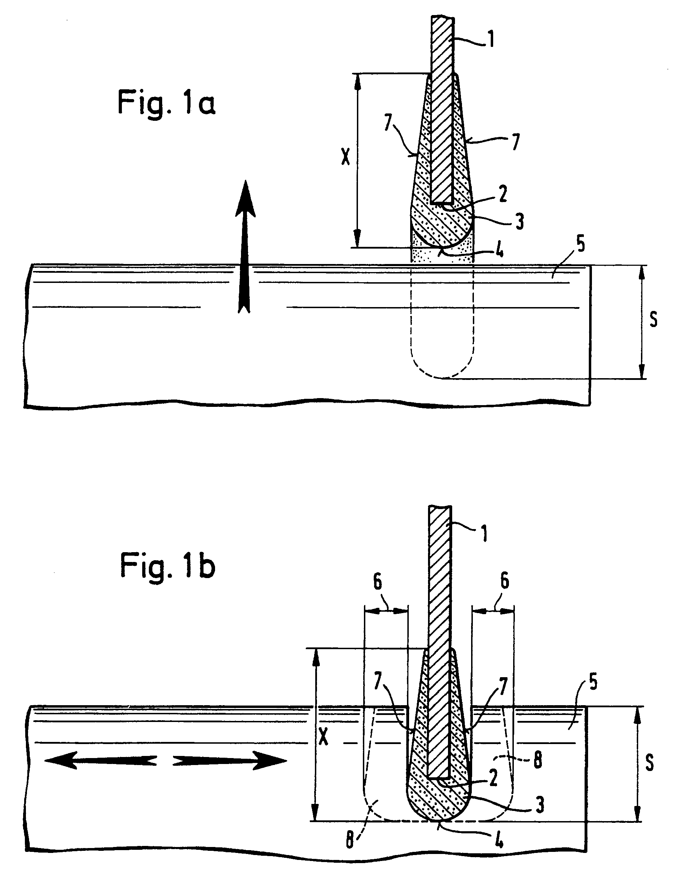

Das erfindungsgemäße Verfahren wird nachstehend anhand der Figuren 1a und 1b näher erläutert, in denen schematisch die Relativbewegungen zwischen Schneidbelag und Feststoff dargestellt sind. In beiden Figuren sind einander entsprechende Einzelteile mit denselben Bezugsziffern versehen.

Gemäß Fig. 1a ist das Sägeblatt 1 beispielsweise einer Innenlochsäge an seiner Innenkante 2 von einem Schneidbelag 3, beispielsweise einer Nickel/Diamant-Beschichtung mit z.B. tropfenförmigem Querschnitt umgeben. An die Schneidkante 4 wird in einer dem Sägevorgang entsprechenden Relativbewegung (Pfeilrichtung) ein Feststoff 5, beispielsweise ein etwa fingerdicker Zylinder aus in keramisches Material eingebetteten Korundkörnern, herangeführt. Dabei wird so weit in den Feststoff 5 eingesägt, daß die Schnittiefe S etwa 2/3 der Höhe X des Schneidbelages beträgt.

Gemäß Fig. 1b wird nun eine zur Richtung des Sägevorganges transversale Oszillation (Pfeilrichtung) des harten Materials 5 mit der Auslenkung 6 aus der ursprünglichen Position (vgl. Fig. 1a) durchgeführt. Dabei kommen auch die Flanken 7 des Schneidbelages in Kontakt mit dem Feststoff 5, in welches schließlich die durch gestrichelte Linien angedeutete Ausnehmung 8 eingearbeitet wird.

Grundsätzlich ist es auch nicht ausgeschlossen, die erforderlichen Relativbewegungen bei ortfestem Feststoff 5 durch Bewegung des Sägeblattes 1 zu bewirken, wobei diese Variante jedoch erheblich größeren Aufwand erfordert.

Das hier erläuterte Verfahren eignet sich allgemein zum Schärfen von Trennwerkzeugen, bei denen die Schneidkante von einem Schneidbelag mit gebundenem Schneidkorn gebildet wird, wie beispielsweise bei manchen Außentrennsägen oder Bandsägen. Mit besonderem Vorteil wird es beim präzisen Abtrennen von Scheiben mit ca. 0.1 bis 10 mm Dicke von Stäben oder Blöcken aus Halbleiter- oder oxidischem Material wie Silicium, Germanium, Galliumarsenid oder Gallium-Gadolinium-Granat eingesetzt, bei dem oft eine besonders hohe geometrische Präzision gefordert ist, insbesondere bezüglich der meist als sog. "bow" oder "warp" charakterisierten Durchbiegung der Scheiben.

Der eigentliche Sägevorgang kann dabei in der üblichen Art und Weise durchgeführt werden, beispielsweise indem von einem Siliciumstab Scheibe für Scheibe abgetrennt und entnommen wird oder der Stab in eine Vielzahl miteinander verbundener Scheiben zerteilt und diese Verbindung anschließend aufgetrennt wird, wobei das letztere Verfahren auch bei Mehrblattinnenlochsägen in Frage kommt.

Wenn beim Sägen die aus der ungleichmäßigen Beanspruchung der Schneidkante resultierenden Abweichungen des Sägeblattes von der idealen, gewünschten Schnittlinie, die beispielsweise während des Schnittes mit Hilfe von Meßsonden am Sägeblatt selbst oder anschließend durch Vermessung der Geometrie der erhaltenen Scheiben festgestellt werden können, einen bestimmten, vorher festgelegten Toleranzwert überschreiten, wird vor dem nächsten Schnitt die Schneidkante des rotierenden Sägeblattes in der vorher erläuterten Weise geschärft.

Eine andere Möglichkeit besteht darin, den Schärfschritt jeweils periodisch nach einer bestimmten Anzahl von Schnitten, in der Regel 10 bis 100, vorzunehmen. Diese Vorgehensweise empfiehlt sich insbesondere bei einem weitgehend automatisierten Sägeprozeß.

Auch der Schärfvorgang selbst kann automatisch ablaufen, beispielsweise indem der in einer beweglichen Halterung befindliche Feststoff mittels Schrittmotoren in die Schärfposition und zur Ausführung der Säge- und Oszillationsbewegung gebracht · wird. Denkbar erscheint beispielsweise auch der Einsatz eines Handgerätes mit einer oszillierbaren Halterung für den Feststoff, bei dem die Sägebewegung von Hand, die Oszillationsbewegung aber motorgetrieben erfolgt. Allgemein hat der Einsatz von transportierbaren Geräten den Vorteil, daß nicht jede Sägeeinheit mit einer eigenen Schärfeinrichtung versehen sein muß.

Mit besonderem Vorteil wird das erfindungsgemäße Schärfverfahren in Verbindung mit einem Innenlochsägeverfahren eingesetzt, bei dem während des eigentlichen Sägevorganges der Schnittverlauf dadurch gesteuert wird, daß auf eine oder beide Seitenflächen des rotierenden Sägeblattes vor dem Eintreten in den Sägespalt zusätzlich zumindest zeitweise ein Fluid aufgebracht wird. Dieses Verfahren ist in der DE-A-36 40 645 erläutert.

Insbesondere wenn es in Verbindung mit diesem Sägeverfahren eingesetzt wird, lassen sich durch das erfindungsgemäße Schärfverfahren deutlich verlängerte Sägeblattstandzeiten in Verbindung mit einer verbesserten Schnittgenauigkeit und damit höherer geometrischer Qualität der erhaltenen Scheiben erreichen.

Anhand des nachstehenden Ausführungsbeispiels wird die Erfindung näher erläutert :

Vergleichsbeispiel :

In einer herkömmlichen Innenlochsäge wurden unter den üblichen Sägebedingungen einkristalline Siliciumstäbe (Durchmesser ca. 10 cm) in Scheiben von ca. 650 µm Dicke zersägt. Das Sägeblatt besaß einen Außendurchmesser von ca. 55 cm und einen Innenlochdurchmesser von ca.18 cm. Die Innenkante war mit einer ca. 2 mm hohen Nickelbeschichtung versehen, in welche in ungerichteter Weise Diamantkörner eingebunden waren und rotierte mit einer Geschwindigkeit von ca. 18 m/sec. Der Werkstückvorschub war auf eine Geschwindigkeit von ca. 6cm/min eingestellt. Während des Sägevorganges wurde die Abweichung des Sägeblattes von der idealen Schnittlinie mittels eines Mikrosensors überwacht. Überschritt diese Abweichung, aus der sich auf die geometrische Präzision der erhaltenen Scheiben schließen läßt, einen Wert von ± 10 µm gegenüber dem vorgesehenen Schnittverlauf, so wurde vor dem nächsten Sägevorgang das Sägeblatt nachgeschärft, indem für ca. 7 sec. in einem zylinderförmigen Körper aus keramisch gebundenem Siliciumcarbidpulver (Durchmesser ca. 2 cm) gesägt wurde.

Durchschnittlich nach jedem 8. Sägevorgang mußte das Sägeblatt nachgeschliffen werden. (Diese Intervalle betrugen anfänglich bis zu 20, verkürzten sich jedoch immer mehr, bis gegen Ende der Sägeblattstandzeit nach jedem Sägevorgang nachgeschliffen werden mußte). Nach etwa 700 Schnitten konnte das Sägeblatt trotz mehrmaligen Schärfens nicht mehr innerhalb der vorgesehenen Toleranzgrenze gehalten werden und mußte ausgewechselt werden.

Beispiel :

In der dem Vergleichsbeispiel entsprechenden Säge wurden mit einem neuen Sägeblatt in genau der gleichen Weise Siliciumstäbe derselben Spezifikation zersägt.

Beim Nachschärfen wurde jedoch der Schärfzylinder aus keramisch gebundenem Siliciumcarbidpulver mittels einer Schärfvorrichtung mit Hilfe eines Schrittmotors jeweils mit einer Geschwindigkeit von ca. 6 cm/min gegen die Schneidkante bewegt, bis sich diese ca. 1.5 mm tief in ihn eingearbeitet hatte. Danach wurde mittels eines zweiten Schrittmotors der Zylinder transversal zu der ersten Bewegung in Oszillation versetzt, die ihn ca. ± 0.5 mm aus der Ruhelage auslenkte und mit einer Maximalgeschwindigkeit von 20 m/sec. jeweils gegen das Sägeblatt bewegte. Diese Oszillation wurde für jeweils ca. 1 sec. aufrechterhalten.

Bei diesem Schärfverfahren mußte die Schneidkante durchschnittlich alle 40 Schnitte nachgeschärft werden. Erst nach 3000 Schnitten war es nicht mehr möglich, das Sägeblatt innerhalb der vorgegebenen Toleranzgrenze zu halten, so daß es ausgewechselt werden mußte.

**Ansprüche**

1. Verfahren zum Schärfen von Trennwerkzeugen (1) für das Abtrennen von Scheiben von stab- oder blockförmigen Werkstücken, insbesondere aus Halbleitermaterial, mit auf die Schneidkante aufgebrachtem Schneidbelag (3) mit gebundenem Schneidkorn durch kurzzeitiges Sägen in einen Feststoff (5), dadurch gekennzeichnet, daß beim kurzzeitigen Sägen zusätzlich zu einer dem Sägevorgang entsprechenden Relativbewegung zwischen Schneidkante (4) und Feststoff eine dazu transversale oszillierende Relativbewegung zwischen Schneidkante und Feststoff ausgeführt wird.

2. Verfahren nach Anspruch 1, dadurch gekennzeichnet, daß die dem Sägevorgang entsprechende Relativbewegung zwischen Schneidkante und Feststoff mindestens mit der beim eigentlichen Sägevorgang eingehaltenen Vorschubgeschwindigkeit ausgeführt wird.

3. Verfahren nach den Ansprüchen 1 oder 2, dadurch gekennzeichnet, daß die transversale oszillierende Relativbewegung mindestens mit einer der Umlaufgeschwindigkeit der Schneidkante entsprechenden Maximalgeschwindigkeit ausgeführt wird.

4. Verfahren nach einem oder mehreren der Ansprüche 1 bis 3, dadurch gekennzeichnet, daß die transversale oszillierende Relativbewegung während mindestens fünf Umläufen der Schneidkante ausgeführt wird.

5. Verfahren nach einem oder mehreren der Ansprüche 1 bis 4, dadurch gekennzeichnet, daß bei der transversalen oszillierenden Relativbewegung die Auslenkung des Feststoffes 0.1 bis 1 mm beträgt.

6. Verfahren nach einem oder mehreren der Ansprüche 1 bis 5, dadurch gekennzeichnet, daß die dem Sägevorgang entsprechende Relativbewegung zwischen Schneidkante und Feststoff mindestens bis zu einer Schnittiefe (S) ausgeführt wird, bei welcher die breiteste Stelle des Schneidbelages sich innerhalb des Feststoffes befindet.

7. Verfahren zum Abtrennen von dünnen Scheiben von stabförmigen Werkstücken mittels Innenlochsäge, bei dem bei Bedarf vor dem nächsten Schnitt das Sägeblatt (1) durch kurzzeitiges Sägen in einen Feststoff (5) geschärft wird, dadurch gekennzeichnet, daß das kurzzeitige Sägen nach einem Verfahren gemäß den Ansprüchen 1 bis 6 durchgeführt wird.

8. Verfahren nach Anspruch 7, dadurch gekennzeichnet, daß während des eigentlichen Sägevorganges auf eine oder beide Seitenflächen des rotierenden Sägeblattes vor dem Eintreten in den Sägespalt zusätzlich zumindest zeitweise ein Fluid aufgebracht wird.

9. Verfahren nach den Ansprüchen 7 oder 8, dadurch gekennzeichnet, daß das kurzzeitige Sägen periodisch nach einer bestimmten Anzahl von eigentlichen Sägevorgängen vorgenommen wird.


## Claims

1. Process for sharpening cutting-off tools (1), for cutting off slices from bar-shaped or block-shaped workpieces, in particular made of semiconductor material, having a cutting layer (3) which is applied to the cutting edge and has a bonded cutting grain, by momentarily sawing into a solid substance (5), characterized in that, during the momentary sawing, in addition to a relative movement between cutting edge (4) and solid substance corresponding to the sawing operation, an oscillating relative movement transversely thereto between cutting edge and solid substance is performed.

2. Process according to Claim 1, characterized in that the relative movement between cutting edge and solid substance corresponding to the sawing operation is performed at least at the feed rate maintained during the actual sawing operation.

3. Process according to either of Claims 1 and 2, characterized in that the transverse oscillating relative movement is performed at least at a maximum speed corresponding to the peripheral speed of the cutting edge.

4. Process according to one or more of Claims 1 to 3, characterized in that the transverse oscillating relative movement is performed during at least five revolutions of the cutting edge.

5. Process according to one or more of Claims 1 to 4, characterized in that the deflection of the solid substance is 0.1 to 1 mm during the transverse oscillating relative movement.

6. Process according to one or more of Claims 1 to 5, characterized in that the relative movement between cutting edge and solid material corresponding to the sawing operation is carried out at least as far as a depth of cut (S) at which the widest point of the cutting layer is located inside the solid substance.

7. Process for cutting off thin slices from bar-shaped workpieces by means of a centrehole saw, in which process the saw blade (1), when required, is sharpened before the next cut by momentarily sawing into a solid substance (5), characterized in that the momentary sawing is carried out following a process according to Claims 1 to 6.

8. Process according to Claim 7, characterized in that, during the actual sawing operation, a fluid is additionally applied at least from time to time to one or both lateral surfaces of the rotating saw blade before entry into the sawing gap.

9. Process according to either of Claims 7 or 8, characterized in that the momentary sawing is carried out periodically after a certain number of actual sawing operations.


## Revendications

1. Procédé pour affûter des outils à tronçonner (1) pour couper des tranches de pièces en forme de barres ou de lingots, en particulier en matériau semiconducteur, possédant une garniture de coupe (3) appliquée sur l'arête coupante et dans laquelle sont liés des grains de coupe, selon lequel l'affûtage est produit par un sciage de courte durée dans un solide, caractérisé en ce que, lors du sciage de courte durée, on produit, en plus du mouvement relatif correspondant au sciage entre l'arête coupante (4) et le solide, un mouvement relatif oscillant transversal à lui entre l'arête coupante et le solide.

2. Procédé selon la revendication 1, caractérisé en ce que le mouvement relatif correspondant au sciage entre l'arête coupante et le solide est exécuté au moins à la vitesse d'avance respectée lors du sciage proprement dit.

3. Procédé selon la revendication 1 ou 2, caractérisé en ce que le mouvement relatif d'oscillation transversale est exécuté au moins à une vitesse maximale correspondant à la vitesse périphérique de l'arête coupante.

4. Procédé selon une ou plusieurs des revendications 1 à 3, caractérisé en ce que le mouvement relatif d'oscillation transversale est exécuté pendant au moins cinq tours de l'arête coupante.

5. Procédé selon une ou plusieurs des revendications 1 à 4, caractérisé en ce que la déviation du solide pendant le mouvement relatif d'oscillation transversale est de 0,1 à 1 mm.

6. Procédé selon une ou plusieurs des revendications 1 à 5, caractérisé en ce que le mouvement relatif correspondant au sciage entre l'arête coupante et le solide est exécuté au moins jusqu'à une profondeur de coupe (S) à laquelle le point le plus large de la garniture se trouve à l'intérieur du solide.

7. Procédé pour couper des tranches minces de pièces en forme de barres au moyen d'une scie annulaire ou scie en couronne, selon lequel on affûte la lame de scie, au besoin, avant la coupe consécutive, par un sciage de courte durée dans un solide (5), caractérisé en ce que l'on exécute le sciage de courte durée d'après un procédé selon les revendications 1 à 6.

8. Procédé selon la revendication 7, caractérisé en ce que, pendant le sciage proprement dit, on applique en outre, au moins par moments, un fluide sur l'une ou sur les deux faces latérales de la lame de scie tournante avant que celle-ci ne pénètre dans le trait de scie.

9. Procédé selon la revendication 7 ou 8, caractérisé en ce que l'on effectue le sciage de courte durée de manière périodique après un nombre déterminé de sciages proprement dits.

Fig. 1a

Fig. 1b